Europäisches Patentamt

European Patent Office

Office européen des brevets

(11) Numéro de publication: **0 348 278**
**A1**

## (12) DEMANDE DE BREVET EUROPEEN

(21) Numéro de dépôt: 89401693.0

(22) Date de dépôt: 16.06.89

(51) Int. Cl.⁴: **G 02 B 6/44**

(30) Priorité: 20.06.88 FR 8808237

(43) Date de publication de la demande:
27.12.89 Bulletin 89/52

(84) Etats contractants désignés: **DE GB IT NL**

(71) Demandeur: **SAT (Société Anonyme de Télécommunications)**
**6, avenue d'Iéna**
**F-75116 Paris (FR)**

(72) Inventeur: **Violo, Robert, Dominique**
**41, rue Cantagrel**
**F-75631 Paris Cédex 13 (FR)**

**Calevo, Robert**
**41, rue Cantagrel**
**F-75631 Paris Cédex 13 (FR)**

**Suillerot, Didier, Maurice**
**41, rue Cantagrel**
**F-75631 Paris Cédex 13 (FR)**

(74) Mandataire: **Martinet & Lapoux**
**62, rue des Mathurins**
**F-75008 Paris (FR)**

(54) **Module de répartition et raccordement de fibres optiques.**

(57) Dans un boîtier (6) ayant une face avant ouvrable, plusieurs supports de boucles de fibre sensiblement plans et mobiles (22A, 22B, 22C) sont rangeables parallèlement à la face avant dans le boîtier. Des barrettes (227) de connecteurs (224) sont respectivement fixées aux supports et servent à connecter deux-à-deux des fibres optiques (Fe, Fs). Des coulisseaux (66) sur des glissières (660) fixées dans le boîtier permettent de translater ensemble les supports (22A, 22B, 22C) sensiblement perpendiculairement à la face avant (61), et complètement à l'extérieur du boîtier. Une tige (7) porteuse des supports est montée à rotation entre les coulisseaux afin de tourner ensemble les supports à l'extérieur du boîtier et autour d'un axe de rotation sensiblement parallèle à la face avant. L'intérieur du boîtier est alors accessible. Chacun des supports peut pivoter autour d'un axe (A) perpendiculaire au support afin de le dégager des autres supports.

*FIG.1*

EP 0 348 278 A1

**Description**

## Module de répartition et raccordement de fibres optiques

La présente invention concerne un module du genre boîtier parallélépipédique ayant une face avant ouvrable et contenant plusieurs supports parallèles et mobiles, dits cassettes, pour supporter, des boucles de fibres optiques lovées et des connecteurs de fibre.

Par exemple, le module peut constituer une boîte de branchement dans un réseau de télédistribution câblé afin de raccorder des premières fibres optiques provenant de plusieurs câbles élémentaires d'un multicâble relié à un central de télédistribution, à des secondes fibres desservant des installations de vidéocommunication chez des abonnés. Ainsi, le module sert d'une part à protéger les différentes connexions entre fibres, d'autre part à disposer de boucles de fibres nécessaires à la préparation, la réparation et la modification des connexions entre fibres. Un tel module est bien souvent fixé le long d'une colonne montante dans un immeuble, et par nature doit offrir un volume réduit, tout en permettant une accessibilité aux boucles de fibre latérales aux supports et une manipulation des connecteurs.

Selon la EP-A-0146 478, trois montages différents de supports rectangulaires dans le boîtier sont envisagés. Le boîtier comporte une face avant ouvrable à travers lesquels les supports peuvent être déplacés un à un vers l'extérieur du boîtier. Selon un premier montage, les supports sont rangés perpendiculairement à la face avant dans le boîtier, et sont pivotables individuellement autour d'un axe qui est parallèle à la face avant et perpendiculaire aux supports et à deux côtés longitudinaux du boîtier. Le premier montage est également envisagé dans la EP-A-0215668 qui concerne des supports à un seul connecteur fibre-à-fibre, complété d'un connecteur de secours et d'un connecteur à une fibre intermédiaire, dite jarretière. Selon un second montage, les supports sont rangés parallèlement à la face avant dans le boîtier, et sont pivotables respectivement autour d'axes de rotation individuels qui sont parallèles à la face avant et qui sont situés le long de chants longitudinaux des supports et alignés dans un plan oblique à la face avant du boîtier. Enfin, selon un troisième montage, les supports sont rangés perpendiculairement à la face avant du boîtier et coulissables individuellement et perpendiculairement à celle-ci.

Par définition, la face avant du boîtier est la face directement accessible à un opérateur, notamment lorsqu'une face arrière du boîtier, parallèle à la face avant, est accrochée à un mur le long duquel sont acheminés les câbles et, le cas échéant, des fibres optiques individuelles. Par conséquent, pour les trois montages de support connus selon la EP-A-0146478, l'extraction de l'un des supports vers l'extérieur du boîtier par pivotement, ou rotation, ou coulissement rend très difficile l'accès à l'intérieur du boîtier, particulièrement au niveau de la face arrière du boîtier où sont épanouies les fibres à partir à des câbles. En fait, l'écart entre les support doit être faible pour réduire l'encombrement du boîtier. Les doigts de l'opérateur ne peuvent alors accéder au fond du boîtier sans risque de déconnecter involontairement des fibres ou de fragiliser par coincement ou torsion les fibres optiques.

Pour ces raisons, un même support selon la EP-A-0146478 ne supporte des boucles de premières fibres provenant d'un même premier câble et des boucles de secondes fibres provenant d'un même second câble et les connecteurs supportés par le support ne connectent que les fibres précitées, et non des fibres provenant d'autres câbles ou d'autres supports.

En outre, lorsque le boîtier ne comprend qu'un petit nombre de supports, par exemple 2 à 5 supports, l'épaisseur des supports lorsqu'ils sont empilés est inférieure à la largeur ou longueur des supports si bien qu'il est préférable de ranger les supports parallèlement au mur et donc à la face avant ouvrable dans le boîtier, afin de restreindre l'épaisseur du boîtier, notamment lorsque le boîtier est disposé dans un couloir. Un tel rangement de supports parallèles à la face avant est conforme au second montage selon les Figs. 2a et 2b de la EP-A-0146478. Cependant, ce second montage offre, outre les inconvénients mentionnés ci-dessus, une très difficile accessibilité aux supports ayant des axes de pivotement éloignés de la face avant et donc proches de la face arrière du boîtier, et une dimension suivant une direction parallèle aux faces de boîtier et donc perpendiculaire aux axes de pivotement qui est plus grande que nécessaire, puisque les axes de pivotement individuels sont sensiblement disposés dans un plan oblique aux faces du boîtier.

La présente invention vise donc à fournir un module dans le boîtier duquel les supports de boucles et connecteurs de fibre sont rangés parallèlement aux faces avant et arrière, mais sont extractibles du boîtier de manière à accéder aisément au fond du boîtier, vers la face arrière, et à manipuler plusieurs supports ensemble à l'extérieur du boîtier et à accéder individuellement aux faces à cassette de boucle de fibre de chaque support, bien que les autres supports soient à l'extérieur du boîtier.

A cette fin, un module pour répartir et raccorder des premières et secondes fibres optiques est tel que caractérisé selon la revendication 1.

Les moyens pour translater sont de préférence deux coulisseaux coulissant sur deux glissières inférieure et supérieure fixées à l'intérieur du boîtier et perpendiculairement à la face avant. Les moyens pour translater servent à transporter simultanément tous les supports à l'extérieur du boîtier, devant la face avant de celui-ci, ce qui rend accessible la face arrière du boîtier et particulièrement les extrémités des câbles à fibre optique, maintenues par des têtes d'épanouissement connues à un côté ou à la face arrière du boîtier.

En outre, selon l'invention, le module comporte des moyens pour stocker des boucles de réserve des fibres entre les têtes d'épanouissement et les supports. Avantageusement, les moyens pour stocker sont translatables avec les supports, et donc fixés aux moyens pour tourner, afin de lover facilement les fibres à l'extérieur du boîtier et dans des compartiments prévus à ce effet dans les moyens de stockage.

Une fois que les supports sont translatés à l'extérieur du boîtier, les moyens pour tourner permettent d'orienter les supports afin que les connecteurs soient face à l'opérateur et perpendiculaires à la face avant du boîtier, et qu'au moins l'un des supports puisse pivoter dans un plan perpendiculaire à la face avant en s'éloignant de celle-ci, et donc être dégagé latéralement des autres supports.

D'autres caractéristiques avantageuses de l'invention sont énoncées dans les revendications dépendantes.

D'autres avantages et caractéristiques de la présente invention apparaîtront plus clairement à la lecture de la description suivante de plusieurs réalisation préférées de l'invention, en référence aux dessins annexés dans lesquels :

- la Fig. 1 est une vue de face verticale d'un boîtier de module de répartition et de raccordement de fibres optiques selon l'invention ;
- la Fig. 2 est une vue de dessus de compartiments du module pour boucle de réserve de fibre, situés en partie inférieure du module ;
- la Fig. 3 est une vue de dessus de supports de cassettes de boucles de lovage de fibre et connecteurs, rangés en partie supérieure dans le boîtier du module ;
- la Fig. 4 est une vue analogue à la Fig. 2, après coulissement des compartiments de boucles de réserve de fibre vers l'extérieur du boîtier ;
- la Fig. 5 est une vue analogue à la Fig. 3 et complémentaire de la Fig. 4, après coulissement des supports de cassettes et connecteurs vers l'extérieur du boîtier ;
- la Fig. 6 est une vue analogue aux Figs 2 et 4, après rotation des compartiments de réserve de fibres à l'extérieur du boîtier ;
- la Fig. 7 est une vue analogue aux Figs. 3 et 5 et complémentaire de la Fig. 6, après rotation des supports de cassettes et connecteurs à l'extérieur du boîtier ; et
- la Fig. 8 est une vue de côté verticale , après coulissement vers l'extérieur et rotation à l'extérieur de l'ensemble des supports et compartiments, et après pivotement de l'un des supports.

Un module unitaire de répartition et raccordement de fibres optiques est conçu pour recevoir des premières fibres optiques Fe, dites fibres d'entrée, qui sont issues d'extrémités dégaînées d'au moins un câble d'entrée Ce, en vue de les raccorder deux à deux à des secondes fibres optiques Fs, dites fibres de sortie, d'au moins un câble de sortie Cs, respectivement. Les fibres d'entrée Fe proviennent par exemple de stations de distribution de vidéotransmission ou d'autocommutateurs et ont des extrémités à enficher dans les premiers demi-connecteurs 224e de connecteurs quelconques mais repérables, comme on le verra dans la suite. Par contre, les fibres de sortie Fs sont habituellement destinées à desservir des équipements et installations d'abonné et sont en nombre variable en fonction des besoins d'exploitation et de la répartition géographique des abonnés.

Dans une réalisation préférée de l'invention, chacun des câbles Ce et Cs comprend dix fibres optiques, et le module est destiné à raccorder les fibres optiques Fe de trois câbles d'entrée Ce aux fibres optiques Fs de trois câbles de sortie Cs. Une fibre Fe peut être connectée a priori à n'importe quelle fibre de sortie Fs. Toutefois, d'autres répartitions de câbles et de fibres optiques peuvent être envisagées. L'invention s'applique à toutes combinaisons de câbles, y compris des multicâbles comprenant une pluralité de câbles élémentaires à fibres optiques réunis hélicoïdalement dans une gaine. Un câble élémentaire peut être du type à jonc rainuré hélicoïdalement ou à tubes, renforcé éventuellement d'une armature centrale. Les fibres peuvent être noyées dans de la graisse pour les protéger contre l'humidité. Ces diverses combinaisons peuvent être du type de celles citées dans la EP-A-0246961.

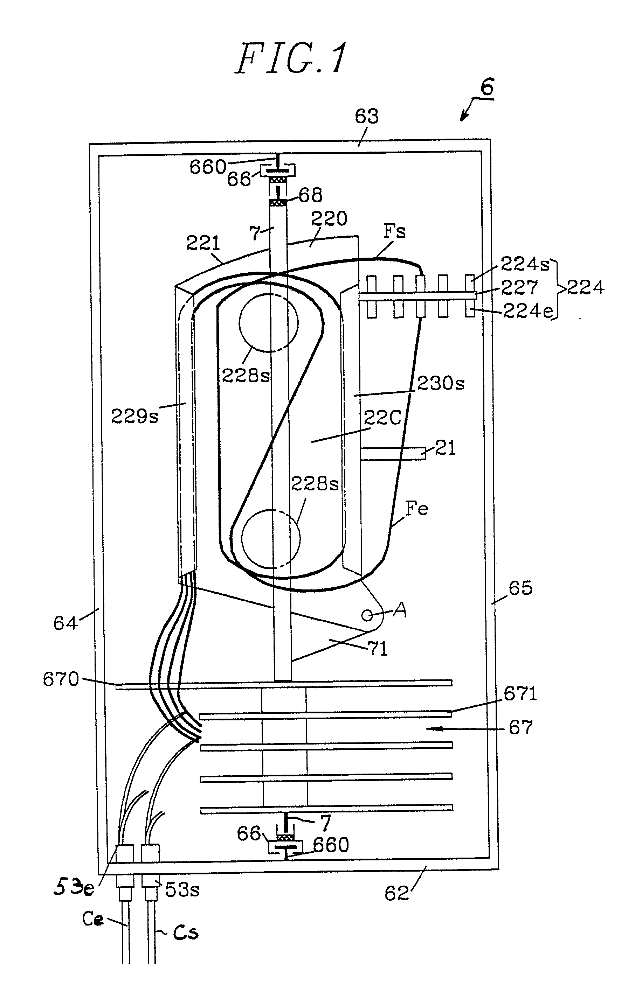

En référence aux Figs. 1 à 3, le module se présente sous la forme d'un boîtier parallélépipédique 6 ayant une grande face arrière 60 accrochée verticalement à un mur ou cloison M, une grande face avant 61 constituée par un couvercle amovible ou pivotant vers l'extérieur, des côtés inférieur et supérieur horizontaux 62 et 63, et des côtés longitudinaux verticaux 64 et 65. Le boîtier 6 comprend essentiellement, en partie supérieure, trois supports 22A, 22B et 22C pour des boucles de lovage de fibre optique et des connecteurs fibre-à-fibre, et, en partie inférieure, plusieurs compartiments 67 pour stocker des boucles de réserve des fibres optiques Fe et Fs sortant épanouies des câbles Ce et Cs.

Sachant que tous les supports 22A, 22B et 22C sont identiques, l'un d'eux, tel que le support 22C, est décrit en détail ci-après lorsqu'il est enfermé dans le boîtier 6. Ce support est constitué par un secteur de plaque 220 sensiblement quadrilatéral et, en particulier, découpé sensiblement selon un trapèze isocèle ayant des petite et grande bases s'étendant verticalement et respectivement en regard des côtés longitudinaux de boîtier 64 et 65. Lorsqu'il est complètement enfermé dans le boîtier 6, le support 22C est parallèle aux grandes faces 60 et 61 du boîtier. Le support 22C est pivotable autour d'un petit axe horizontal A. L'axe A est perpendiculaire au secteur de plaque 220 et localisé dans un coin inférieur du secteur trapézoïdal 220 à proximité de la grande base du trapèze.

A l'opposé de l'axe de pivotement A et à une distance prédéterminée de cet axe de pivotement le long de la grande base du secteur trapézoïdal, un porte-connecteur 227 est fixé perpendiculairement à la grande base du support 22C. Par exemple, le porte-connecteur 227 est une barrette soudée au support 22C et possède deux rangées de connecteurs fibre-à-fibre alignées parallèlement au plan du support 22C et de part et d'autre de celui-ci. Le porte-connecteur 227 porte ici deux rangées de cinq connecteurs 224 chacune, bien qu'en pratique, environ vingt connecteurs peuvent être prévus par support. Selon la réalisation illustrée à la Fig. 1, chacun des connecteurs comporte deux demi-connecteurs 224e et 224s colinéaires suivant un axe vertical d'alignement pour raccorder une extrémité d'une fibre optique d'entrée Fe à une extrémité d'une fibre optique de sortie Fs. L'axe d'alignement des deux demi-connecteurs est disposé transversalement au porte-connecteur 227 et ainsi parallèlement à la grande base du support 22C. Les connecteurs 224 sont montés à coulissement ou fixés par vis, ou encliquetage ou tout autre moyen connu sur le porte-connecteur 227. Chacun des demi-connecteurs 224e et 224s dans un connecteur 224 comporte des moyens connus longitudinaux pour abouter et aligner l'extrémité d'une fibre optique Fe, Fs avec une extrémité d'une fibre optique Fs, Fe. On supposera dans la suite que les demi-connecteurs 224s sont disposés au-dessus des demi-connecteurs 224e. En outre, on notera que l'on entend par connecteur tout dispositif de raccordement de deux ou plusieurs fibres, tel que coupleurs et duplexeurs optiques.

Le support 22C est bordé de préférence verticalement par des profilés en U formant gouttière sur chacune de ses faces. Deux gouttières 229e et 229s sont soudées le long de la petite base du support, et deux gouttières 230e et 230s sont soudées le long de la grande base du support. Comme montré à la Fig. 3, les gouttières 229e et 230e sont en regard et situées sur la face arrière du support 22C pour constituer une première cassette recevant des boucles de fibres d'entrée Fe, et les gouttières 229s et 230s sont en regard et situées sur la face avant du support 22C afin de constituer une seconde cassette pour recevoir des boucles de fibres de sortie Fs. Le support 22C comporte également deux paires de noyaux alignés verticalement 228e et 228s qui sont respectivement disposées à mi-distance entre les petites et grandes bases verticales du support. Les noyaux 228e sont situés respectivement en partie supérieure et en partie inférieure dans la cassette arrière, et les noyaux 228s sont respectivement disposés en partie supérieure et en partie inférieure de la cassette avant. Chacun des noyaux est circulaire et peut avoir une forme cylindrique ou en calotte sphérique. Les deux noyaux et les deux gouttières sur une même face du support 22 qui coopèrent pour former une cassette sont destinés à recevoir des faibles surlongueurs de fibres optiques Fe ou Fs et à maintenir chacune des fibres sensiblement en une boucle de réserve qui est disponible à proximité des connecteurs 224.

Comme montré à la Fig. 1, les fibres Fe et Fs proviennent des compartiments de stockage 67 situés en-dessous des supports 22A, 22B et 22C, et remontent d'abord le long des gouttières respectives 229s et 229e en vue d'être lovées dans les cassettes respectives. Ainsi, une fibre de sortie Fs remontant le long de la gouttière 229s est lovée en effectuant un tour autour de l'ensemble des deux noyaux 228s pour finalement sortir par le haut de la cassette avant correspondante, contourner l'extrémité supérieure de la gouttière 230s et atteindre un demi-connecteur 224s. Une fibre d'entrée Fe après avoir longé la gouttière 229e contourne le noyau supérieur 228e puis descend en diagonale dans la cassette arrière correspondante pour contourner par le bas le noyau inférieur 228e et l'extrémité inférieure de la gouttière 230e afin de remonter en direction d'un demi-connecteur correspondant 224e. De préférence, les fibres optiques d'entrée Fe atteignent les demi-connecteurs 224e en traversant un anneau horizontal aplati de regroupement 21 fixé en partie inférieure à la grande base du support 22C. Toutefois, on notera que les fibres d'entrée comme les fibres de sortie peuvent effectuer plusieurs tours complets dans les cassettes arrière et avant respectives afin de former de grandes portions de réserve de fibre. Les boucles de réserve sont ainsi protégées contre des agressions extérieures et contre toute courbure excessive dans un volume extrêmement réduit constitué par les deux cassettes de part et d'autre du support 22C.

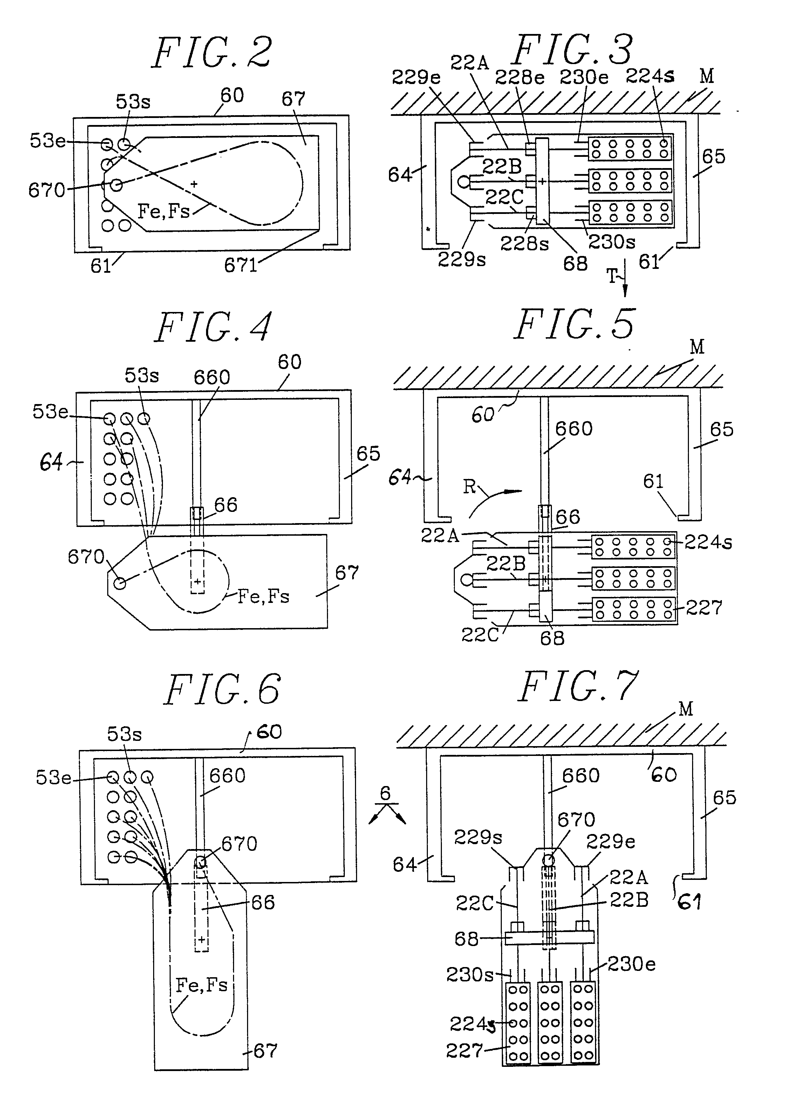

Dans la réalisation illustrée, il est avantageusement prévu un espace de stockage pour boucles de réserve de fibre sous les supports 22A, 22B et 22C. Comme montré aux Figs. 1 et 2, cet espace de stockage est constitué par les compartiments disposés horizontalement 67 situés à proximité de têtes d'épanouissement 53e et 53s pour les câbles d'entrée Ce et de sortie Cs. Chacune des têtes d'épanouissement 53e, 53s, est fixée en partie inférieure du boîtier 6 contenant les compartiments et de préférence, au côté inférieur 62 du boîtier 6. Une tête d'épanouissement peut être telle que celles décrites dans la demande de brevet européen EP-A-0243234. Selon cette demande de brevet, les fibres optiques épanouies à partir d'une tête sont acheminées en direction des connecteurs 224 sous des tubes ou gaines de protection souples en élastomère. Bien que l'invention se réfère à tout type de fibre optique, multimode ou monomode, les gaines de protection souples précitées sont utilisées particulièrement pour des fibres monomodes de faible diamètre par rapport à celui des gaines.

Les compartiments 67 sont typiquement au nombre de quatre et sont formés entre cinq cloisons parallèles 671, sensiblement horizontales. Chaque compartiment 67 reçoit plusieurs boucles de réserve de plusieurs fibres Fe, Fs lovées selon des courbures de rayon appropriées. Les fibres lovées sont ensuite extraites de chaque compartiment 67 pour être guidées verticalement par l'intermédiaire d'un trou 670 qui est pratiqué au moins dans la cloison supérieure 671 et qui assure la distribution le long des gouttières 229e et 229s en direction des cassettes sur les flancs des supports 22A, 22B et 22C, comme montré à la Fig. 2.

Il est à noter que les boucles de fibre dans les cassettes des supports 22A, 22B, 22C sont particulièrement destinées à procurer des surlongueurs de fibre lors d'une manipulation des fibres pour préparer leurs extrémités et les introduire dans les connecteurs 224. Par contre, les boucles de fibre stockées dans les compartiments 67 servent non seulement à rendre disponible de grandes surlongueurs de fibres mais à permettre les déplacements en translation et rotation des supports et compartiments, comme on le verra dans la suite.

Comme montré schématiquement à la Fig. 1, une tige centrale 7 s'étend verticalement dans le boîtier 6 et relie ensemble les trois supports et les cloisons des compartiments 67. Au-dessus de la cloison supérieure 671, la tige 7 comporte un bras 71, ou plusieurs bras, à l'extrémité desquels sont montés les axes d'articulation A des trois supports 22A, 22B et 22C. En partie inférieure, la tige 7 traverse les cloisons 671 qui sont soudées à la tige 7, et peut servir d'axe pour lover les fibres dans les compartiments 67.

L'ensemble des supports 22A, 22B et 22C ainsi que les cloisons 671 est extractible du boîtier 6 au moyen de deux jeux de coulisseau 66 et glissière 660 disposés horizontalement et perpendiculairement au mur M contre lequel la grande face arrière 60 du boîtier est accrochée, comme montré à la Fig. 3. Les glissières 660, qui sont éventuellement télescopiques, sont fixées à l'intérieur du boîtier 6 et transversalement aux petits côtés supérieur 63 et inférieur 62 du boîtier. Typiquement les glissières 660 sont des profilés en T ou en queue d'aronde contenue et sont symétriques par rapport à un plan horizontal. Le profil des coulisseaux 66 est complémentaire de celui des glissières et coulisse le long de celles-ci. Des butées adéquates prévues aux extrémités des glissières limitent la course des coulisseaux 66 de sorte que l'ensemble des supports et compartiments puisse sortir complètement à l'extérieur du boîtier. Les coulisseaux 66 sont fixés respectivement aux extrémités inférieure et supérieure de la tige centrale 7 supportant les supports 22A, 22B et 22C ainsi que les cloisons 671.

Cependant, de préférence, les extrémités de la tige 7 sont montées à rotation entre les coulisseaux 66. A l'extrémité supérieure de la tige tournante 7 peut être prévue une petite réglette 68 de maintien et guidage des supports 22A, 22B et 22C, cette réglette 68 étant fixée à rotation sous le coulisseau supérieur 66. De même, une petite réglette avec bras 71 peut être prévue pour recevoir les axes d'articulation A des supports.

Comme montré aux Figs. 2 et 3, les supports 22A, 22B et 22C sont rangés côte à côte dans le boîtier 6 et parallèlement au mur M et à la face arrière du boîtier formant fond du boîtier. Ces supports avec les compartiments 67 sont extraits du boîtier 6, par coulissement des coulisseaux 66 le long des glissières 660 perpendiculaires au mur M. L'extraction se fait suivant la direction de translation indiquée par la flèche T dans la Fig. 3, et à travers la face avant ouverte 61 du boîtier 6 située à l'opposé du mur M. Cette face 62 peut être fermée, comme déjà dit, par un couvercle qui est soit amovible du boîtier, soit articulé à l'un des côtés 62 à 65 de celui-ci. Après glissement des coulisseaux vers l'extérieur, l'ensemble des supports 22A, 22B et 22C et les compartiments 67 atteint une position complètement externe au boîtier 6, comme montré aux Figs. 4 et 5. Chacune des fibres optiques Fe, Fs présente encore une ou plusieurs boucles de dimension un peu plus réduite que celle montrée à la Fig. 2, mais selon un rayon de courbure supérieure au diamètre critique, dans le compartiment respectifs 67. En effet, les boucles de réserve de fibre permettent d'offrir une certaine surlongueur de fibre afin de déplacer l'ensemble des supports et compartiments à l'extérieur du boîtier. A ce stade, bien que les supports 22A, 22B et 22C soient complètement à l'extérieur du boîtier 6, les cassettes et les connecteurs 224 ne sont pas accessibles ou tout au moins visibles directement par un opérateur se trouvant face à la face ouverte 61 du boîtier 6, puisque les supports sont empilés verticalement.

L'ensemble des supports 22A, 22B, 22C et l'ensemble des compartiments 67 pivotent ensuite de 90° par rotation axiale de la tige 7, entre les coulisseaux 66, comme indiqué par la flèche R dans la Fig. 5. A la fin de cette rotation, comme montré aux Figs 6 et 7, le groupe des trois supports 22A, 22B et 22C et les porte-connecteurs 227 sont perpendiculaires à la face 60 et au mur M. Les porte-connecteurs 227 sont présentés face à l'opérateur.

Dans la position précédente des compartiments et supports, comme montré à la Fig. 6, chacune des fibres Fe, Fs dans les compartiments 67 offrent au moins une boucle détendue à partir de la tête d'épanouissement correspondante 53e, 53s par rapport à la boucle montrée à la Fig. 4. En outre, bien que les connecteurs 224 soient face à l'opérateur selon la Fig. 7, particulièrement les connecteurs 224 situés à proximité des gouttières 230e et 230s, maintenant à l'avant des supports, sont difficilement accessibles. De plus, pour les opérations de raccordement des fibres, les boucles de fibre se trouvant dans les cassettes, particulièrement entre les supports latéraux 22A et 22C ne sont pas accessibles. Par contre, l'intérieur du boîtier 6 est vide de support, et particulièrement la face arrière 60 et le côté 62 susceptibles de porter des têtes d'épanouissement 53e et 53s sont aisément accessibles.

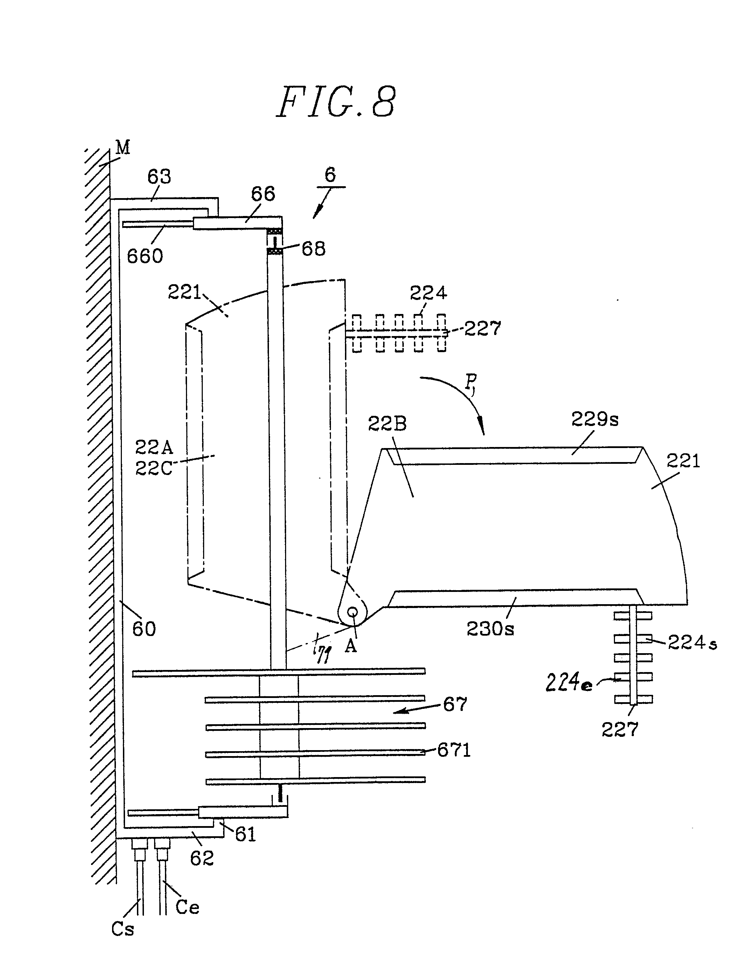

Une troisième étape opératoire est donc nécessaire pour dégager l'un sélectionné des supports 22A, 22B et 22C par rapport aux autres afin de modifier ou préparer un raccordement relatif à un connecteur 224 supporté par le support sélectionné. Cette troisième étape consiste à pivoter vers l'avant le support sélectionné, tel que le support 22B montré à la Fig. 8, autour de l'axe respectif A qui, en pratique, peut être confondu en un axe de pivotement commun à tous les supports 22A, 22B et 22C. A la fin de ce pivotement à 90° selon la flèche P indiquée à la Fig. 8, le support 22B est saillant devant les autres supports 22A et 22C et offrent des gouttières 229e, 230e et 229s, 230s perpendiculaires aux faces de boîtier 60 et 61 et au mur M. En particulier, les connecteurs 224 sous les gouttières 230e et 230s du support pivoté 22B sont disposées horizontalement et complètement dégagées des autres rangées de connecteurs sur les supports 22A et 22C, ce qui facilite le maniement des demi-connecteurs 224e et 224s supportés par le support 22B ; en outre, les flancs latéraux du support 22B sont complètement libérés des supports 22A et 22C et saillent devant ceux-ci, ce qui rend très aisément accessibles les boucles de fibre dans les cassettes 229e, 230e et 229s,230s du support 22B.

Il est à noter que chacun des supports 22A, 22B et 22C est trapézoïdal, et en particulier, le petit chant transversal supérieur 221 du support à l'opposé de l'axe de pivotement est un arc de cercle de centre A, comme montré aux Figs. 1 et 8. Cette caractéristique permet de glisser le support sous la réglette 68 lors du pivotement P et de réduire ainsi la hauteur du boîtier 6 par rapport à un support rectangulaire de même hauteur.

Après raccordement de fibres Fs à des fibres Fe et/ou modification des raccordements existants et, le cas échéant, retour par pivotement du support 22B à la position montrée à la Fig. 7, et pivotement d'un ou plusieurs autres supports, des opérations inverses à celles précédemment sont effectuées. Par exemple, à partir de la situation montrée à la Fig. 8, le support 22B est pivoté de 90° suivant le sens contraire à la flèche P, puis l'ensemble de supports 22A, 22B et 22C et compartiments 67 subit simultanément une rotation suivant le sens contraire à la flèche R pour être positionné comme montré aux Figs 4 et 5, et enfin ledit ensemble est poussé à l'intérieur et vers la face arrière 60 du boîtier suivant le sens contraire à la flèche T, et de préférence, la face avant 61 est fermée par le couvercle du boîtier.

## Revendications

1 - Module pour répartir et raccorder des premières et secondes fibres optiques, comprenant dans un boîtier (6) ayant une face avant ouvrable (61), plusieurs supports de boucles de fibre sensiblement plans et mobiles (22A, 22B, 22C) qui sont rangeables parallèlement à la face avant dans le boîtier, plusieurs moyens (227, 224) respectivement fixés aux supports pour connecter deux-à-deux les premières fibres optiques (Fe) et les secondes fibres optiques (Fs), caractérisé en ce qu'il comprend :
des moyens (66) montés à coulissement dans le boîtier pour translater ensemble lesdits supports (22A, 22B, 22C) sensiblement perpendiculairement à la face avant (61), de l'intérieur vers l'extérieur du boîtier, et
des moyens (7, 71) montés à rotation sur les moyens pour translater, pour tourner ensemble lesdits supports (22A, 22B, 22C) à l'extérieur du boîtier et autour d'un axe de rotation (7) sensiblement parallèle à la face avant (61),
chacun desdits supports (22A, 22B, 22C) étant monté à pivotement sur les moyens pour tourner (7) autour d'un axe de pivotement (A) perpendiculaire au support.

2 - Module conforme à la revendication 1, caractérisé en ce que les moyens pour translater comportent un coulisseau (66) relié à tous les supports (22A, 22B, 22C) par l'intermédiaire des moyens pour tourner (7, 71) et monté à coulissement sur une glissière (660) qui est fixée à l'intérieur du boîtier (6) et est perpendiculaire à la face avant (69).

3 - Module conforme à la revendication 2, caractérisé en ce que les moyens pour tourner comportent une tige (7) ayant une extrémité montée à rotation sur le coulisseau (66) respectivement, l'une des extrémités de la tige ayant un bras (71) recevant ledit axe de pivotement (A) perpendiculaire à la tige.

4 - Module conforme à l'une quelconque des revendications 1 à 3, caractérisé en ce qu'il comprend des moyens (67) fixés aux moyens pour tourner (7, 71) pour stocker des boucles de réserve de fibre (Fe, Fs).

5 - Module conforme à la revendication 4, caractérisé en ce que les moyens pour stocker comprennent des cloisons parallèles, disposées perpendiculairement à la face avant (61) du boîtier (6) et aux supports (22A, 22B, 22C).

6 - Module conforme à la revendication 4 ou 5, caractérisé en ce que ledit axe de rotation (7) est disposé perpendiculairement à deux côtés parallèles (62, 63) du boîtier (6) perpendiculaires à la face avant (61), et en ce que, lorsqu'ils sont rangés avec les supports dans le boîtier, les moyens pour stocker (67) sont disposés juste au-dessus de l'un (62) desdits côtés, lesdits supports (22A, 22B, 22C) étant situés juste en-dessous de l'autre (63) desdits côtés.

7 - Module conforme à la revendication 6, caractérisé en ce que lesdites fibres (Fe, Fs) sont épanouies dans le boîtier en direction des moyens pour stocker (67) au moyen de têtes d'épanouissement (53e, 53s) fixées au boîtier et liées à des câbles à fibres optiques (Ce, Cs).

8 - Module conforme à l'une quelconque des revendications 1 à 7, caractérisé en ce que chacun desdits supports (22A, 22B, 22C) comprend des paires de gouttières (229e, 230e ; 229s, 230s) en regard et bordant respectivement deux chants parallèles sur les faces du support afin de constituer deux cassettes recevant des boucles des premières et secondes fibres (Fe, Fs).

9 - Module conforme à la revendication 8, caractérisé en ce que chaque cassette comprend deux noyaux (228e, 228s) fixés à la face respective du support et alignés sensiblement parallèlement aux gouttières pour faciliter un lovage des fibres en boucles.

10 - Module conforme à l'une quelconque des revendications 1 à 9, caractérisé en ce que le moyen pour connecter fixé à l'un des supports comprend une barrette (227) de connecteurs fibre-à-fibre (224) située sensiblement dans le plan dudit support et fixée perpendiculairement à un chant du support.

11 - Module conforme à la revendication 10, caractérisé en ce que la barrette de connecteurs (227) est fixée à une extrémité dudit chant de support, et l'axe de pivotement (A) dudit support est localisé à proximité de l'autre extrémité dudit chant.

12 - Module conforme à la revendication 11, caractérisé en ce que des connecteurs (224) s'étendent parallèlement audit chant de support en au moins une rangée perpendiculairement audit chant.

13 - Module conforme à l'une quelconque des revendications 1 à 12, caractérisé en ce que chaque support (22A, 22B, 22C) est sensiblement quadrilatéral, de préférence trapézoïdal isocèle, et l'axe de pivotement (A) traverse un coin dudit support.

14 - Module conforme aux revendications 4 et 13, caractérisé en ce que le coin du support traversé par l'axe de pivotement (A) est situé à proximité des moyens pour stocker des boucles de réserve de fibre (67).

# FIG.1

FIG.2

FIG.3

FIG.4

FIG.5

FIG.6

FIG.7

# FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 215 668 (ADC TELECOMMUNICATIONS INC.) <br> * Figures 3,4,12,16; page 11, lignes 10-34; page 12, lignes 1-34; page 13, lignes 1-34; page 14, lignes 1-6; page 16, lignes 12-34; page 17, lignes 1-34; page 18, lignes 1-34; page 19, lignes 1-15 * <br> --- | 1,9,10 | G 02 B    6/44 |
| A | FR-A-2 586 827 (LIGNES TELEGRAPHIQUES) <br> * Figure 15; page 10, lignes 6-35; page 11, ligne 1 * <br> --- | 1 | |
| A,D | EP-A-0 146 478 (LIGNES TELEGRAPHIQUES) <br> * Figures 1a,1b,3; page 4, lignes 12-30; page 5, lignes 26-34; page 6, lignes 1-10 * <br> ----- | 1 | |
| | | | **DOMAINES TECHNIQUES RECHERCHES (Int. Cl.4)** |
| | | | G 02 B    6/00 <br> H 02 G   15/00 |

Le présent rapport a été établi pour toutes les revendications

| Lieu de la recherche | Date d'achèvement de la recherche | Examinateur |
|---|---|---|
| LA HAYE | 27-09-1989 | MATHYSSEK K. |